# DEMANDE DE BREVET EUROPEEN

(11) **EP 0 703 592 A1**
(43) Date de publication de la demande: **27.03.1996**
(21) Numéro de dépôt: 95402103.6
(22) Date de dépôt: 19.09.1995
(51) Int. Cl.: H01H 21/38, H01H 21/84, B60Q 1/14

(54) **Commutateur électrique pour l'alimentation des feux de position d'un véhicule automobile**

(30) Priorité: 20.09.1994 FR 9411172
(71) Demandeur: MAGNETI MARELLI FRANCE, F-92000 Nanterre (FR)
(72) Inventeur: Gauthier, Christian, F-92200 Neuilly sur Seine (FR)
(74) Mandataire: Texier, Christian

(57) **Abrégé**

La présente invention concerne un commutateur électrique pour la commande des feux de position d'un véhicule automobile, comprenant : un boîtier (10), un levier (30) guidé à pivotement par rapport au boîtier (10), un équipage principal (100) placé dans le boîtier (10), lié au levier (30) pour être déplacé lors du pivotement de celui-ci, et adapté pour commander l'alimentation des indicateurs de changement de direction, caractérisé par le fait qu'il comprend en outre un équipage secondaire (200) lié à l'équipage principal (100) par un système à perte de course (140, 240) pour commander les feux de position.

## Description

La présente invention concerne le domaine des commutateurs électriques pour la commande des moyens d'éclairage et des indicateurs lumineux pour véhicules automobiles.

Plus précisément, la présente invention concerne la commande des indicateurs lumineux dénommés généralement feux de position ou lanternes.

Par feux de position, on entend les feux servant à indiquer la présence et la largeur d'un véhicule.

De tels feux de position sont prévus à l'avant et à l'arrière du véhicule.

Plus précisément encore, la présente invention concerne des moyens permettant de commander unilatéralement des feux de position, c'est-à-dire d'alimenter sélectivement, soit les feux de position droit, soit les feux de position gauche.

De tels moyens sont actionnés lorsque le véhicule est à l'arrêt avec faible visibilité ou après tombée de la nuit, pour permettre d'indiquer la présence de celui-ci, tout en limitant la consommation électrique du système prélevée sur la batterie, en limitant l'alimentation aux feux de position situés sur le côté adjacent au couloir de circulation.

Différents moyens répondant à la fonction précitée ont déjà été proposés.

On a ainsi proposé des moyens de commande comprenant des interrupteurs secondaires de sélection droite ou gauche en série d'un interrupteur principal de commande des feux de position.

On a également proposé, par exemple dans le document EP-A-194938, des moyens de commande d'indicateurs de changement de direction dont la structure de base classique est adaptée pour présenter une surcourse permettant de commander respectivement une sélection des feux de position droits ou gauches, comme indiqué précédemment grâce à une bascule bistable actionnée lors de cette surcourse.

On a encore proposé dans le document FR-A-2697943 un commutateur comprenant une bague guidée à rotation sur un levier autour d'un premier axe et comportant une structure excentrée par rapport à cet axe et en prise avec un tiroir pour contrôler un déplacement à translation de celui-ci, et un équipage lié au levier et guidé à pivotement autour d'un second axe généralement orthogonal au premier, lequel équipage porte des moyens formant butée adaptés pour interdire un libre déplacement du tiroir lorsqu'il est lui-même placé en position active.

La présente invention a maintenant pour but de perfectionner les commutateurs existants.

Un but important de la présente invention est notamment de simplifier la structure des commutateurs électriques antérieurs connus conçus pour la commande des feux de position.

Ces buts sont atteints selon la présente invention grâce à un commutateur électrique comprenant :
Commutateur électrique pour la commande des feux de position d'un véhicule automobile, comprenant :
- un boîtier,
- un levier guidé à pivotement par rapport au boîtier,
- un équipage principal placé dans le boîtier, lié au levier pour être déplacé lors du pivotement de celui-ci, et adapté pour commander l'alimentation des indicateurs de changement de direction,

caractérisé par le fait que l'équipage principal comprend un tiroir guidé à translation dans le boîtier, qu'il comprend en outre un équipage secondaire lié à l'équipage principal par un système à perte de course pour commander les feux de position, l'équipage secondaire comprenant un coulisseau adjacent au tiroir et guidé à translation sur le boîtier, par un ensemble à rainure/nervure complémentaires prévues respectivement sur le coulisseau et le boîtier, les moyens de liaison à perte de course définis entre l'équipage secondaire et l'équipage principal comprenant une structure en saillie sur l'un de ces deux éléments et une chambre de plus grande extension sur l'autre de ces deux éléments.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue schématique en perspective éclatée d'un commutateur électrique conforme à la présente invention,
- la figure 2 représente un détail de réalisation de ce commutateur, et illustre plus précisément la fixation d'une lamelle de connexion sur un tiroir ou coulisseau conforme à la présente invention,
- la figure 3 représente une vue schématique partielle en perspective éclatée d'un sous-ensemble conforme à la présente invention,
- la figure 4 représente une vue schématique en perspective d'un tiroir conforme à la présente invention,
- la figure 5 représente une vue schématique partielle du même commutateur selon une vue schématisée V sur la figure 1 correspondant à une direction d'observation généralement parallèle à l'axe de pivotement du levier,
- la figure 6 représente une autre vue partielle du même commutateur selon la vue référencée VI sur la figure 1, généralement orthogonale à l'axe de pivotement précité,

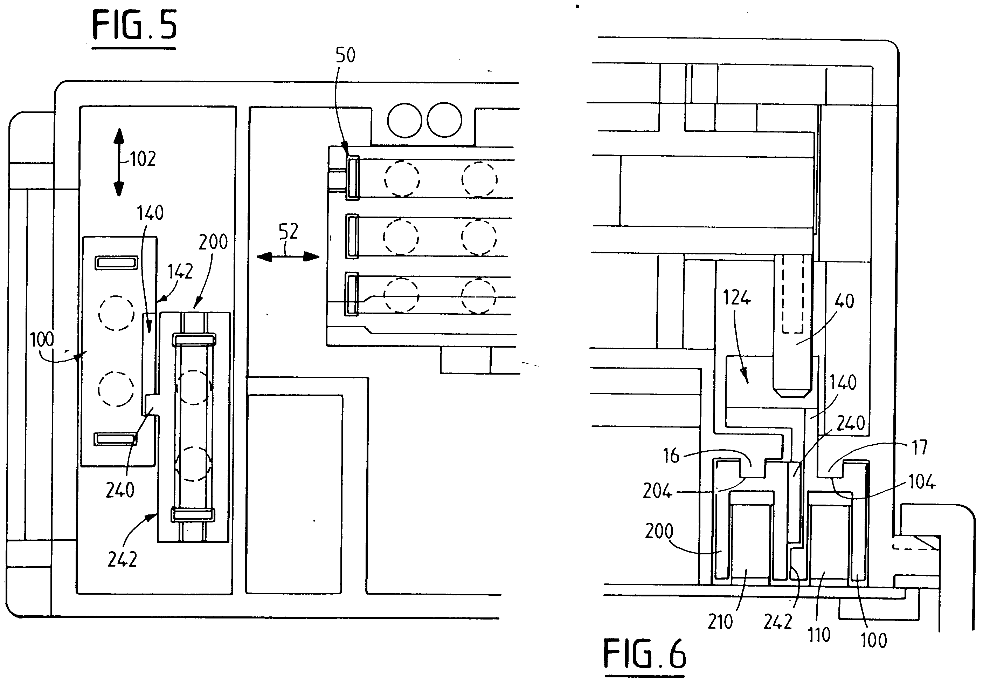

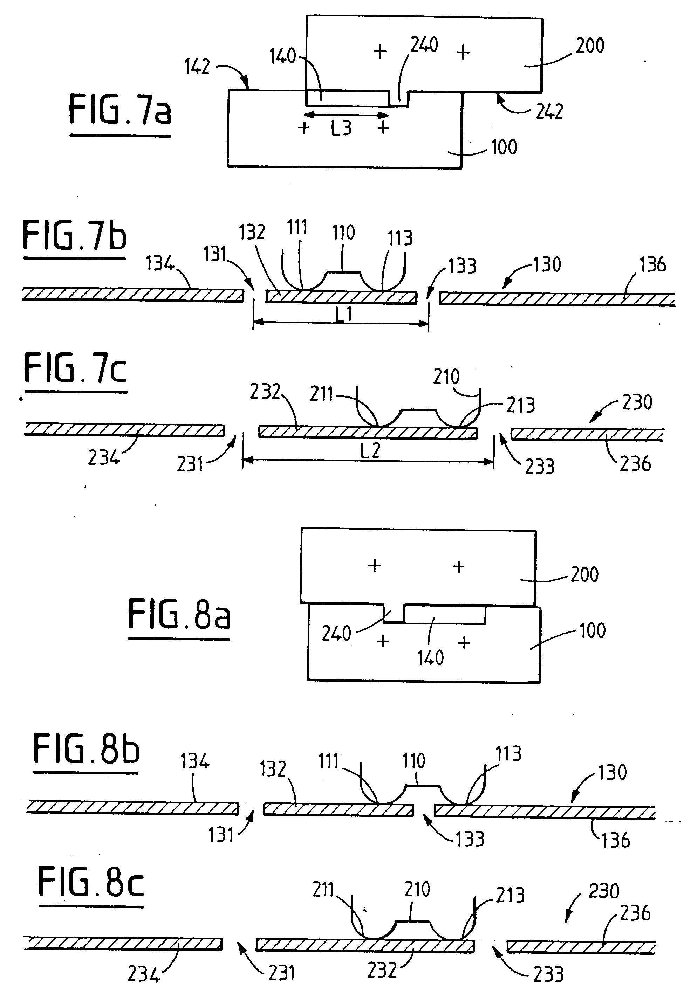

- les figures 7 à 14 correspondent respectivement à une première position de repos, une première position stable de commande des indicateurs de changement de direction, une seconde position stable de commande des indicateurs de changement de direction, une seconde position de repos, une première position instable de commande des feux de position, une première position stable de commande des feux de position, une seconde position instable de commande des feux de position et une seconde position stable de commande des feux de position, plus précisément sur les figures 7 à 14, les vues pourvues d'un indice a représentent une vue de dessus d'un tiroir et d'un coulisseau conformes à la présente invention, similaire à la figure 5, les figures pourvues d'un indice b illustrent la position d'une lamelle d'alimentation des indicateurs de changement de direction, par rapport à des lames de contact associées et les figures pourvues d'un indice c illustrent la position relative d'une lamelle d'alimentation des feux de position par rapport à des lames de contact associées, et
- la figure 15 représente une vue d'un coulisseau d'alimentation conforme à la présente invention, perpendiculairement à sa direction de translation, comme illustré sur la vue référencée XV sur la figure 1, et illustre plus précisément des moyens d'indexation de ce coulisseau.

Le commutateur conforme à la présente invention, représenté sur les figures annexées, comprend un boîtier 10 fermé par un couvercle 20. Le boîtier 10 et le couvercle 20 sont réalisés de préférence par moulage en matière plastique, comme la majorité des autres pièces composant le commutateur.

Le couvercle 20 est fixé sur le boîtier 10 par tout moyen approprié, par exemple par clipsage ou encliquetage à l'aide de languettes à denture 22 prévues sur le couvercle 20.

Le commutateur conforme à la présente invention comprend en outre un levier de commande 30 allongé centré sur son axe longitudinal 32. Le levier 30 est monté à pivotement sur le boîtier 10 et le couvercle 20 autour d'un axe 31 généralement orthogonal à son axe longitudinal 32.

A cet effet, le levier 30 est avantageusement associé à un bloc 40 comprenant deux tourillons 42 coaxiaux et centrés sur l'axe 31, engagés l'un sur le boîtier 10, l'autre sur le couvercle 20. Le bloc 40 est placé dans le boîtier 10. Bien entendu, le levier 30 doit être accessible à l'extérieur de ce boîtier pour permettre une commande manuelle à pivotement autour de l'axe 31.

Plus précisément encore, de préférence, tout en étant lié au bloc 40 dans la rotation autour de l'axe 31, le levier 30 est lui-même monté à rotation sur ce bloc 40 autour d'un axe 34 généralement orthogonal à la fois à l'axe de pivotement 31 et à l'axe longitudinal 32 précités.

En outre, selon un mode de réalisation avantageux, le levier 30 porte lui-même une bague ou une manette susceptible de rotation par rapport au boîtier 10 autour de l'axe longitudinal 32.

Les trois pivotements ainsi autorisés, respectivement autour des axes 31, 32 et 34 peuvent assurer des effets de commutation électrique respectifs.

A titre d'exemple non limitatif, le pivotement autour de l'axe 31, du levier 30 et du bloc 40, peut être utilisé pour assurer la commande des indicateurs de changement de direction et des feux de position. Le pivotement du levier 30 par rapport au bloc 40 autour de l'axe 34 peut être utilisé pour opérer des inversions code/phare et des appels phares. Enfin, le pivotement de la manette autour de l'axe longitudinal 32 peut être utilisé pour assurer la commande des moyens d'éclairage du véhicule automobile.

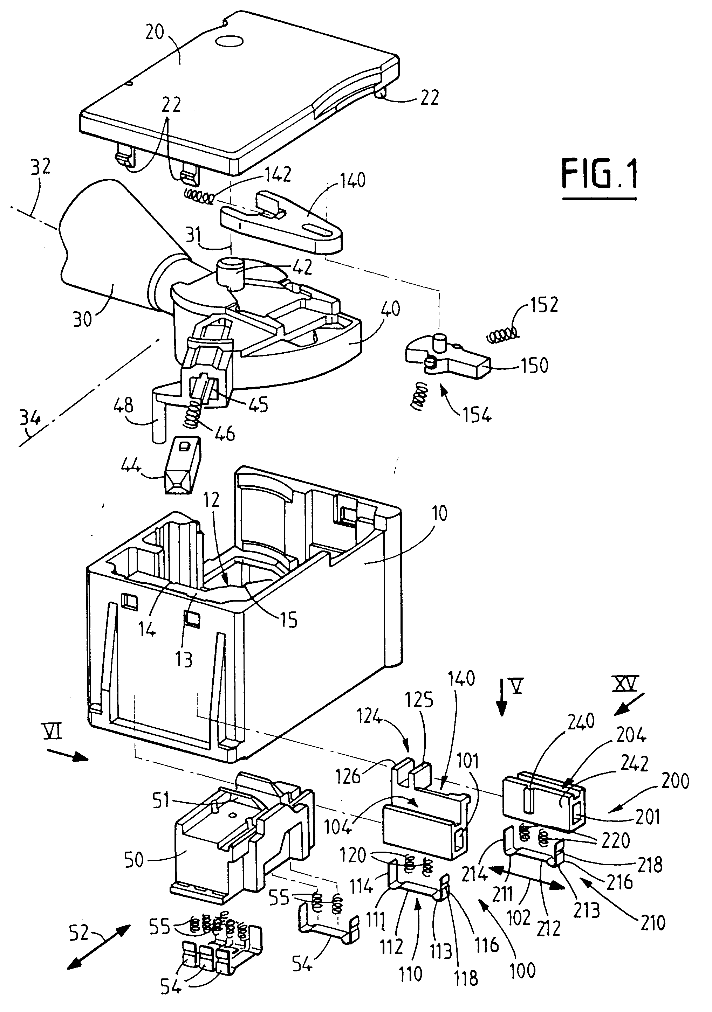

Le pivotement du levier 30 et du bloc 40 autour de l'axe 31 est de préférence indexé. Les moyens d'indexation illustrés sur la figure 1, à cet effet, comprennent un doigt 44 placé dans une chambre 45 formée dans le bloc 40 et qui débouche radialement sur l'extérieur de celui-ci. Le doigt 44 est sollicité par un ressort 46 vers une surface d'indexation 12 prévue sur le boîtier 10, ou rapportée sur celui-ci.

Cette surface d'indexation 12 comprend de préférence un dièdre central 13 encadré de deux dièdres latéraux 14, 15.

La surface d'indexation 12 définit ainsi une position neutre de repos lorsque le doigt ou plot 44 repose contre le fond du dièdre central 13.

La surface d'indexation 12 définit par ailleurs deux positions stables de commande des indicateurs de changement de direction ou des feux de position, selon les modalités qui seront précisées par la suite, lorsque le plot ou doigt 44 repose contre le fond de l'un ou l'autre des deux dièdres latéraux 14, 15.

La même rampe d'indexation 12 définit des positions instables de commande des indicateurs de changement de direction lorsque le doigt 44 est placé entre le dièdre central 13 et l'un ou l'autre des deux dièdres latéraux 14, 15.

Enfin, la surface d'indexation 12 définit des positions instables d'alimentation des feux de position, lorsque le doigt 44 est déplacé au-delà des dièdres latéraux 14, 15.

Le bloc 40 précité possède un doigt de commande 48 excentré par rapport à l'axe de pivotement 31, et formé par exemple d'un barreau cylindrique dont l'axe est parallèle à cet axe 31.

Le commutateur électrique conforme à la présente invention, comprend par ailleurs essentiellement un tiroir 100 utilisé pour la commande des indicateurs de changement de direction, et un coulisseau 200 utilisé pour la commande des feux de position.

Le tiroir 100 est guidé à translation dans le boîtier 10, dans une direction référencée 102 sur les figures annexées, orthogonale à l'axe de pivotement 31. De préférence, le tiroir 100 est formé d'un bloc généralement paraléllépipédique, pourvu sur une face 105 orthogonale à l'axe 31, d'une rainure 104 parallèle à la direction 102 précitée. Cette rainure 104 est engagée sur une nervure complémentaire 16 formée sur le boîtier 10, comme on le voit notamment sur la figure 6.

La coopération ainsi définie entre la rainure 104 et la nervure 16 assure le guidage du tiroir 100 dans la direction 102. Bien entendu, on peut inverser cette disposition, c'est-à-dire que la nervure 16 peut être prévue sur le tiroir 100 tandis que la rainure 104 serait prévue sur le boîtier 10.

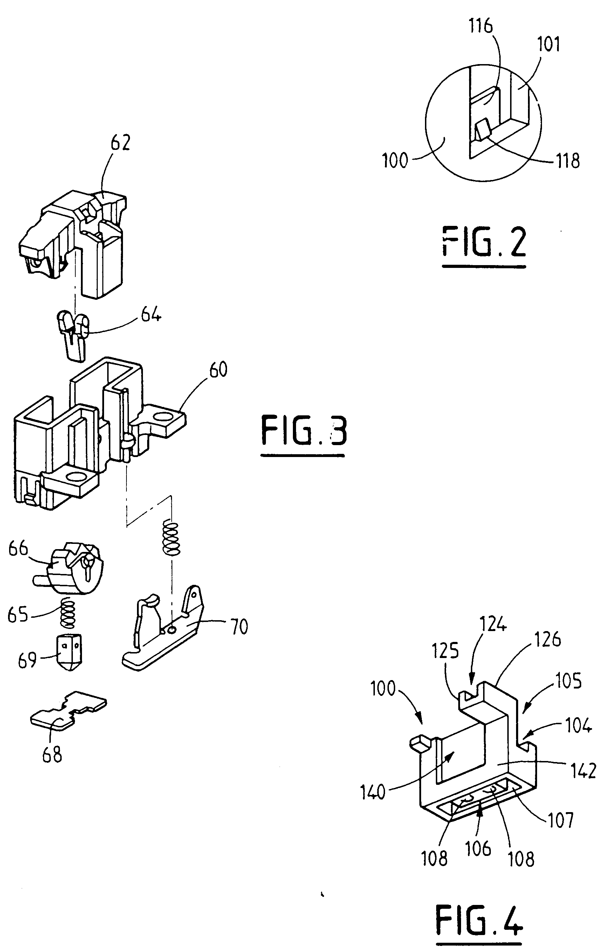

La face 106 opposée du tiroir 100 est ouverte comme on le voit notamment sur la figure 4. Le tiroir 100 possède par ailleurs une chambre interne 107 qui loge une lamelle de connexion 110, laquelle émerge à l'extérieur du tiroir 100 par la face ouverte précitée 106 de celui-ci. La lamelle de connexion 110 a de préférence une forme générale en U. La lamelle 110 comprend ainsi une âme 112 encadrée de deux ailes latérales 114, 116. La lamelle 112 est sollicitée vers l'extérieur du tiroir 100 par au moins un ressort, de préférence deux ressorts 120. Sur la figure 4 on aperçoit deux alésages 108 formés dans la chambre interne 107 pour guider les ressorts 120.

Par ailleurs, la lamelle 110 est pourvue sur son âme 112, et de préférence à proximité des ailes latérales 114, 116, de deux bossages 111, 113 par l'intermédiaire desquels ladite lamelle 110 repose sur un jeu de lames de contact 130 illustré sur les figures 7 et suivantes. Plus précisément, comme on l'explicitera par la suite, ce jeu de lames de contact 130 comprend une lame de contact centrale 132 et deux lames de contact latérales 134, 136.

Ces lames de contact 130 sont portées par le fond du boîtier 10, ou un élément rapporté sur celui-ci.

Le boîtier 10 est ainsi avantageusement surmoulé sur les lames de contact 130.

Les indicateurs de changement de direction d'un côté du véhicule sont alimentés lorsque la lamelle 110 relie la lame de contact centrale 132 à l'une ou l'autre des deux lames latérales 134, 136.

Les indicateurs de changement de direction du véhicule, situés de l'autre côté, sont alimentés lorsque, inversement, la lamelle 110 relie la lame de contact centrale 132 et l'autre lame latérale 136 ou 134.

On comprendra que les ressorts 120 associés à la lamelle 110 sollicitent non seulement celle-ci vers les lames 130, mais sollicitent également le tiroir 100 en appui contre la nervure 16. Ainsi les ressorts 120 suppriment tout jeu de fonctionnement entre le tiroir 100 et le boitier 10.

En outre, le tiroir 100 est pourvu sur sa face 105 qui porte la rainure 104, d'une fourchette 124 dont les deux branches 125, 126 s'étendent sensiblement parallèlement à l'axe de pivotement 31. Plus précisément, la distance séparant les faces internes de ces deux branches 125, 126 est sensiblement égale au diamètre du barreau de commande 48. Par ailleurs, ces deux branches 125, 126 sont situées respectivement de part et d'autre du barreau de commande 48, selon la direction de translation 102.

Ainsi, le pivotement du levier 30 et du bloc 40 autour de l'axe 31, entraîne un déplacement du doigt 48 et par conséquent du tiroir 100, selon la direction 102 grâce à la coopération définie entre le barreau de commande 48 et la fourche 124.

Par ailleurs, les lames de contact 134, 132 et 136 étant réparties selon la direction de translation 102, sur le trajet de la lamelle 110, la lamelle de connexion 110 relie successivement celles-ci, lors du déplacement du tiroir 100 selon cette direction 102, pour assurer l'alimentation des indicateurs de changement de direction.

De façon connue en soi, le commutateur conforme à la présente invention comprend en outre un coulisseau de forçage 140 sollicité par un ressort 142, et un doigt de rappel 150 associé à des ressorts 152, 154, pour assurer le rappel automatique du bloc 40 et du levier 30, d'une position de travail stable (dans laquelle le doigt 44 repose dans l'un des dièdres latéraux 14, 15 et l'un des indicateurs de changement de direction est activé) vers la position neutre de repos (dans laquelle le doigt 44 repose dans le dièdre central 13 et les indicateurs de changement de direction sont désactivés) par rotation du volant. A cet effet, de façon connue en soi, le doigt de rappel 150 est actionné par une came solidaire de l'arbre de direction.

Une telle structure de rappel automatique comprenant un coulisseau de forçage 140 et un doigt de rappel 150 est bien connue de l'homme de l'art et ne sera donc pas décrite dans le détail par la suite.

Comme on le voit sur la figure 2, de préférence, tout en restant libre d'un certain déplacement vers l'extérieur du tiroir 100 sous l'effet de la sollicitation des ressorts 120, la lamelle de connexion 110 est maintenue sur le tiroir 100 grâce à une denture 118 formée par déformation sur chaque aile 114, 116, laquelle denture 118 est engagée dans une fenêtre associée 101 réalisée dans le tiroir 100. Ainsi, lorsque les dentures 118 formées sur la lamelle 110, sont encliquetées dans une fenêtre 101 respective du tiroir 100, la lamelle 110 et le tiroir 100 forment un sous-ensemble dans lequel la lamelle 110 est imperdable. Cette disposition facilite le montage du commutateur.

Le coulisseau 200 est guidé à translation dans le boîtier 10 selon une direction parallèle à la direction 102 de coulissement du tiroir 100. Plus précisément le coulisseau 200 est adjacent au tiroir 100.

Le coulisseau 200 est formé de préférence d'un bloc généralement paraléllépipédique.

Le guidage à translation du coulisseau 200 peut également être obtenu par tout moyen approprié.

De façon comparable au tiroir 100, le coulisseau 200 est muni de préférence d'une rainure 204 engagée sur une nervure complémentaire 17 formée sur le boîtier 10, comme on le voit sur la figure 6. La rainure 204 et la nervure 17 complémentaire doivent s'étendre parallèlement à la direction de translation 102.

Bien entendu, on peut prévoir la disposition inverse, c'est-à-dire que la nervure 17 peut être prévue sur le coulisseau 200, tandis que la rainure 204 serait prévue sur le boîtier 10.

Le coulisseau 200 possède par ailleurs une chambre interne qui reçoit une lamelle de connexion 210 similaire à la lamelle de connexion 110 précitée.

Ainsi la chambre du coulisseau 200 débouche sur la face opposée à la rainure 204 et cette lamelle de connexion 210 est sollicitée vers l'extérieur du coulisseau 200 par des ressorts 220 comparables aux ressorts 120 précités.

De façon similaire à la lamelle 110, la lamelle 210 a de préférence une forme générale de U comprenant une âme 212 pourvue de deux bossages 211, 213 au voisinage de ses extrémités, et encadrée de deux ailes latérales 214, 216 munies chacune de préférence, par déformation, d'une denture 218 conçue pour être encliquetées dans une fenêtre 201 respectivement associée du coulisseau 200, afin d'assurer un auto-maintien de la lamelle de connexion 210 sur le coulisseau 200 précité.

Là encore, les ressorts 220 sollicitent la lamelle 210 vers un jeu de lames de contact 230 et sollicitent le coulisseau 200 vers la nervure 17. Ils suppriment ainsi tout jeu relatif entre le coulisseau 200 et le boîtier 10.

En outre, il est prévu des moyens d'entraînement avec perte de course entre le tiroir 100 lié au doigt de commande 48 par l'intermédiaire de la fourche 124, et le coulisseau 200.

Selon le mode de réalisation préférentiel représenté sur les figures annexées, ces moyens de liaison avec perte de course comprennent une structure 240, par exemple un bloc paraléllépipédique, en saillie sur la face latérale 242 du coulisseau 200, parallèle à la direction de translation 102 et adjacente au tiroir 100. Cette structure en saillie 240 est engagée dans une chambre 140 formée sur la face latérale 142 du tiroir 100 parallèle à la direction de translation 102 et adjacente au coulisseau 200. Pour autoriser une perte de course, c'est-à-dire un déplacement possible du tiroir 100 selon la direction 102 sans déplacement du coulisseau 200, la longueur de la chambre 140 selon la direction de translation 102 doit être supérieure à la largeur de la structure en saillie 240 suivant la même direction 102.

Le coulisseau 200 est également associé à un jeu de lames de contact 230 porté par le fond du boîtier 10 ou rapporté sur celui-ci. De préférence, les lames de contact 230 sont également surmoulées sur le boîtier 10.

Plus précisément, le jeu de lames de contact 230 associé au coulisseau 200 comprend une lame de contact centrale 232 et deux lames de contact latérales 234, 236.

Les feux de position d'un côté du véhicule sont alimentés lorsque la lamelle de connexion 210 relie la lame de contact central 232 et l'une des lames de contact latérales 234 ou 236.

Inversement, les feux de position de l'autre côté du véhicule sont alimentés lorsque la lamelle de connexion 210 relie la lame de contact central 232 et l'autre lame de contact latérale 236 ou 234.

De préférence, le coulisseau 200 comprend en outre des moyens d'indexation qui définissent des positions stables, à ce coulisseau 200, lorsque la position d'alimentation précitée des feux de position est obtenue, malgré la perte de course autorisée entre le tiroir 100 et le coulisseau 200.

De préférence, ces moyens d'indexation sont formés de bossages 206 prévus sur le coulisseau 200 (plus précisément sur la face de ce coulisseau qui porte la rainure 204) et qui coopèrent avec des bossages associés 19 prévus sur le boîtier 10. Les bossages 206 peuvent être prévus par exemple dans le fond de la rainure 204, ou sur les murets délimitant celle-ci. Les bossages 19 sont alors quant à eux formés sur le sommet de la nervure 17 ou de chaque côté de celle-ci.

On va maintenant décrire le fonctionnement du commutateur électrique conforme à la présente invention, en ce qui concerne l'alimentation des feux de position, en regard des figures 7 à 14.

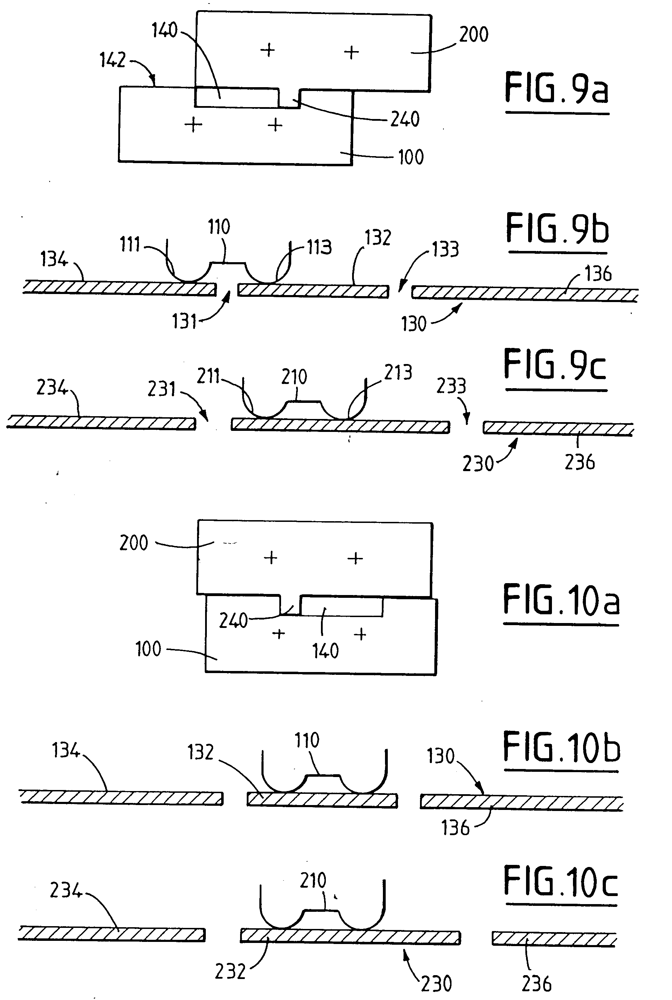

En position de repos stable du levier 30 et du tiroir 100 (le doigt d'indexation 44 est placé dans le dièdre central 13), le coulisseau 200 peut occuper deux positions extrêmes illustrées respectivement sur les figures 7 et 10, selon que la structure en saillie 240 est placée à l'une ou l'autre des deux extrémités de la chambre 140.

Quelle que soit la position relative du coulisseau 200 par rapport au tiroir 100, entre les deux positions extrêmes illustrées sur les figures 7 et 10, en position de repos du tiroir 100, la lamelle de connexion 110 repose uniquement sur la lame de contact centrale 132, tandis que la lamelle de connexion 210 repose uniquement sur la lame de contact centrale 232. Aucun des indicateurs de changement de direction ou des feux de position n'est alors alimenté.

A partir de la position de repos illustrée sur la figure 7a, le tiroir 100 peut être déplacé à translation dans un sens ou dans l'autre vers une position active d'alimentation des indicateurs de changement de direction, selon le sens de pivotement du levier 30 autour de l'axe 31.

Lorsque le tiroir 100 est ainsi déplacé de la position illustrée sur la figure 7a vers la position illustrée sur la figure 8a, la translation du tiroir 100 est sans effet sur le coulisseau 200, en raison de la perte de course autorisée entre la saillie 240 et la chambre 140.

Ainsi, dans cette position de la figure 8, la lamelle de connexion 210 repose toujours uniquement sur la lame de contact centrale 232. En revanche, dans la position illustrée sur la figure 8, la lamelle de connexion 110 relie la lame de contact 132 et la lame de contact latérale 136 pour alimenter l'un des indicateurs de changement de direction.

En revanche, lorsque le tiroir 100 est déplacé de la position illutrée sur la figure 7a vers la position illustrée sur la figure 9a, le coulisseau 200 est lui-même déplacé de la première position de repos représentée sur la figure 7a vers une seconde position de repos analogue à celle représentée sur la figure 10a. De ce fait, tout en étant déplacé sur la lame de contact centrale 232, la lamelle de connexion 210 ne repose toujours que sur cette lame de contact centrale 232. Ainsi, ce déplacement du coulisseau 200 est sans effet sur l'alimentation des feux de position. Par contre, dans la position représentée sur la figure 9, la lamelle de connexion 110 relie la lame de contact centrale 132 et la lame de contact latérale 134 pour alimenter les seconds indicateurs de changement de direction.

Lorsque le tiroir 100 est ramené de sa position active représentée sur la figure 8a vers la position de repos par actionnement du levier 30, le tiroir 100 et le coulisseau 200 se retrouvent dans la position de la figure 7a.

Par contre, lorsque le tiroir 100 est ramené de sa position active illustrée sur la figure 9a vers sa position de repos par actionnement du levier 30, le tiroir 100 et le coulisseau 200 se retrouvent dans la position de repos représentée sur la figure 10a.

De façon symétrique, lorsque le tiroir 100 est déplacé de sa position de repos illustrée sur la figure 10a vers l'une ou l'autre de ces positions actives représentées sur les figures 9a et 8a, le coulisseau 200 est déplacé ou non, en raison de la perte de course autorisée entre le tiroir 100 et le coulisseau 200, mais la lamelle de connexion 210 reste toujours en contact uniquement avec la lame centrale 232 de sorte que le déplacement du tiroir 100 et du coulisseau 200 est sans effet sur l'alimentation des feux de position.

Les positions actives d'alimentation des indicateurs de changement de direction représentées sur les figures 8 et 9 correspondent à des positions stables puisque le plot 44 repose alors contre l'un des dièdres latéraux 14 ou 15. Cependant avant d'atteindre ces positions stables, le tiroir 100 passe par des positions instables d'alimentation des indicateurs de changement de direction. C'est à dire que si le levier 30 est relaché avant que ces positions stables ne soient atteintes, le levier 30 et le tiroir 100 sont ramenés automatiquement dans leur position de repos d'origine par le plot d'indexation 44.

En revanche, lorsque, par pivotement du levier 30 et du bloc 40 autour de l'axe 31, le tiroir 100 est déplacé en surcourse au-delà de l'une ou l'autre de ces deux positions actives stables représentées sur les figures 8a ou 9a, le coulisseau 200 et la lamelle de connexion 210 associée sont déplacés au-delà de la position neutre du coulisseau, de sorte que la lamelle de connexion 210 relie alors alternativement la lame de contact centrale 232 et l'une ou l'autre des deux lames de contact latérales 234, 236.

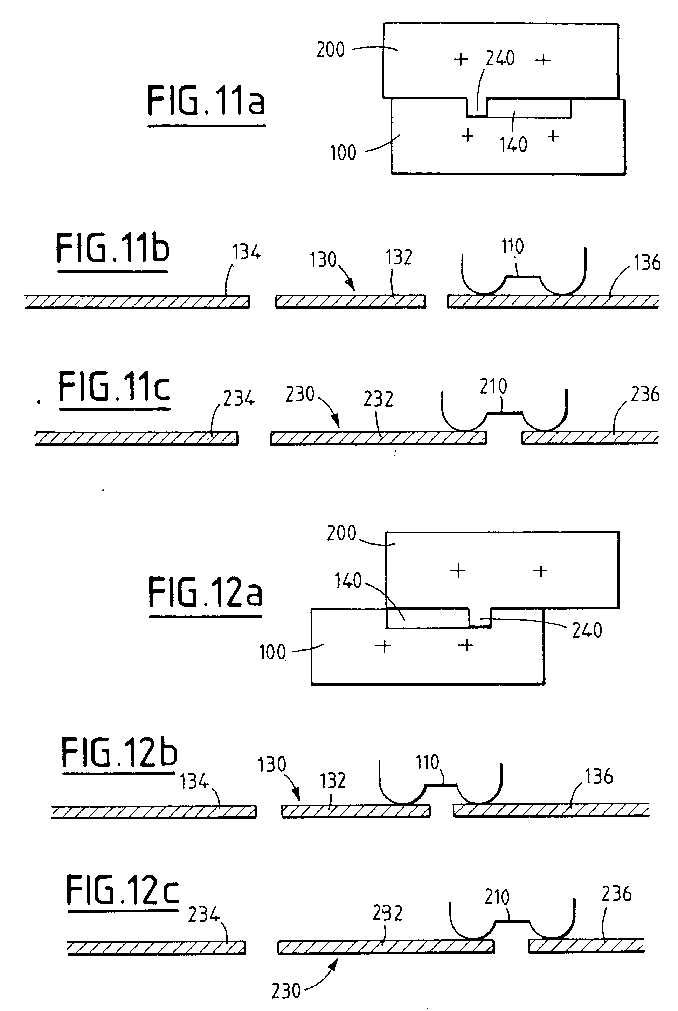

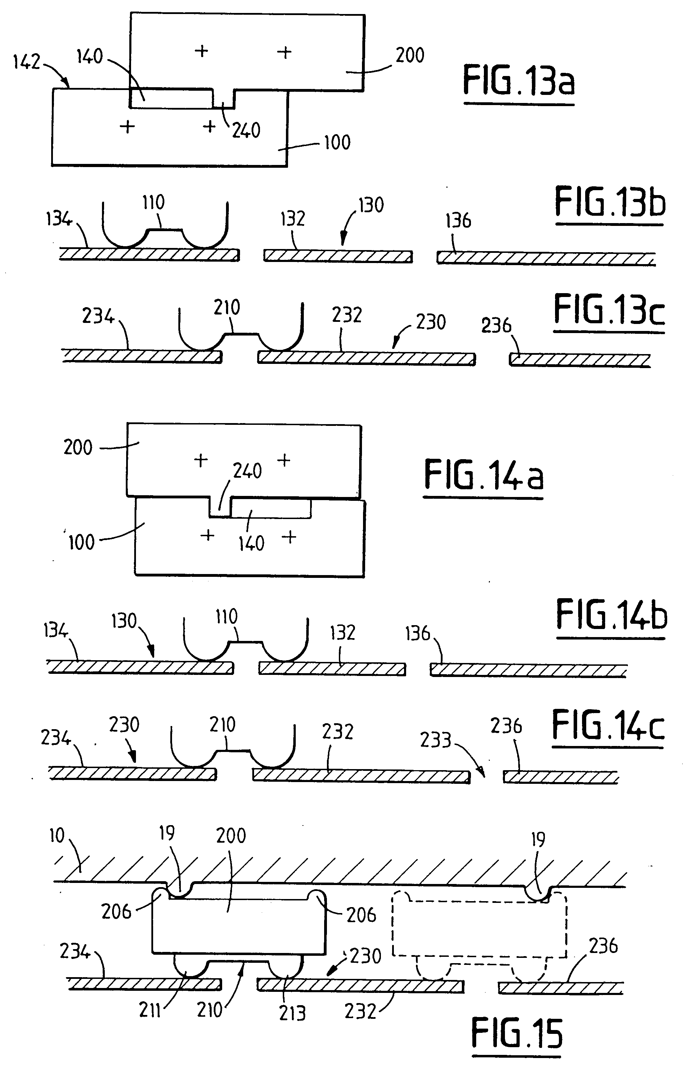

Plus précisément, on obtient tout d'abord une position instable représentée respectivement sur les figures 11 et 13, lorsque le plot 44 est situé au-delà de l'un des dièdres latéraux 14, 15, puis une position stable représentée respectivement sur les figures 12 et 14, après relachement du levier 30, lorsque le plot 44 déplacé élastiquement par le ressort 46 vers le fond de l'un des dièdres latéraux 14, 15, ramène le tiroir 100 vers une position active stable.

La séquence des figures 11 et 12 est obtenue à partir de la position active illustrée sur la figure 8. Inversement la séquence des figures 13 et 14 est obtenue à partir de la position active de la figure 9.

Plus précisément encore, les figures 11 et 13 correspondent à des positions instables du tiroir 100, le plot 44 n'étant pas alors placé en regard d'un cran d'indexation 14, 15, mais cependant à une position stable du coulisseau 200 et de la lamelle de connexion 210 associée grâce à la coopération définie entre les bossages 206 du coulisseau 200 et les bossages 16 du boîtier.

Ainsi, lorsque le tiroir 100 est ramené dans la position stable de la figure 12 ou de la figure 14 par le doigt d'indexation 44, grâce à la perte de course autorisée entre le coulisseau 200 et le tiroir 100, ce rappel est sans effet sur le coulisseau 200 qui reste dans la position respectivement de la figure 11 ou de la figure 13.

Ainsi, dans la position du coulisseau 200 illustrée sur les figures 11 et 12, la lamelle de connexion 210 assure l'alimentation des feux de position situés d'un premier côté du véhicule.

Dans la position du coulisseau 200 représentée sur les figures 13 et 14, la lamelle de connexion 210 assure l'alimentation des feux de position situés de l'autre côté du véhicule.

Pour ramener les moyens de commutation de la position représentée sur les figures 12 ou 14, vers la position de repos des figures 7 ou 10, le levier de commande 30 doit être entraîné dans le sens opposé pour forcer les moyens d'indexation 44/14 et 15, ainsi que 19/206.

Pour résumer le levier 30 possède une position neutre de repos correspondant aux figures 7 et 10, dans laquelle aucun des indicateurs de changement de direction et/ou feu de position n'est alimenté, et de part et d'autre de cette position neutre de repos et de façon symétrique successivement : a) une position instable d'alimentation des indicateurs de changement de direction, b) une position stable d'alimentation des indicateurs de changement de direction correspondant aux figures 8 et 9, c) une position instable d'alimentation des feux de position correspondant aux figures 11 et 13 et d) une position stable d'alimentation des feux de position correspondant aux figures 12 et 14.

Sur les figures annexées, on a référencé 131 et 133 les espaces séparant respectivement la lame de contact centrale 132 et les lames de contact latérales 134, 136. De façon comparable, on a référencé 231, 233, les espaces séparant la lame de contact centrale 232 et les lames de contact latérales 234, 236.

L'homme de l'art comprendra aisément que pour assurer un fonctionnement optimum des moyens de commutation électriques qui viennent d'être décrits, de préférence la distance L1 (voir figure 7) séparant le milieu des espaces 131, 133 doit être égale à deux fois la perte de course L3 définie entre le coulisseau 200 et le tiroir 100, si l'on appelle L3 la possibilité de déplacement relatif entre le coulisseau 200 et le tiroir 100 selon la direction de translation 102.

De même, la distance L2 séparant le centre des espaces 231, 233 doit être égale à trois fois la perte de course L3, pour un fonctionnement optimum de l'ensemble de commutation.

Comme on l'a décrit précédemment, de préférence le commutateur conforme à la présente invention comprend une manette montée à pivotement autour de l'axe longitudinal 32 du levier 30. Cette manette comprend de préférence un élément de commande excentré par rapport à l'axe longitudinal 32 et qui coopère avec un bloc de commutation auxiliaire 50. Ce bloc de commutation 50 est guidé à translation dans une direction 52 généralement transversale à l'axe longitudinal 32. Le bloc 50 comprend une fourche 51 recevant l'élément excentré de la manette précitée. La direction de translation 52 du bloc 50 est avantageusement orthogonale à l'axe de translation 102 du tiroir 100 et du coulisseau 200. Le bloc 50 porte différentes lamelles 54 sollicitées par des ressorts 55, de façon comparable aux lamelles de connexion 110, 210. Ces lamelles de connexion 54 coopèrent avec des lames de contact similaires aux jeux de lames 130, 230, et également portées par le fond du boîtier 10, pour assurer de façon connue en soi, une alimentation sélective des moyens d'éclairage du véhicule en position de repos/code ou ville/phare ou route.

Le commutateur électrique conforme à la présente invention comprend en outre de préférence des moyens de commutation additionnels illustrés sur la figure 3, conçus pour assurer sélectivement des inversions feux de croisement/feux de route et des appels feux de route, lorsque le levier 30 est entraîné à pivotement autour de l'axe 34 par rapport au bloc 40.

Ces moyens de commutation additionnels peuvent faire l'objet de nombreux modes de réalisation.

Selon le mode de réalisation préférentiel représenté sur la figure 3, ils comprennent un corps 60 fixé sur le boîtier 10 et qui guide un coulisseau 62 dans une direction parallèle à l'axe 31.

Le coulisseau 62 porte une palette 64 apte à entraîner une bascule 66 qui actionne une lame de contact basculante 68 par l'intermédiaire d'un poussoir 69 sollicité par un ressort 65. La bascule 66 est montée à rotation autour d'un axe orthogonal à l'axe de translation du coulisseau 62.

Par ailleurs, le bloc 60 porte une lame basculante électriquement conductrice 70 sollicitée également par le coulisseau 62.

Les déplacements de la lame basculante 68 sous l'effet de la bascule 66 assurent les inversions code/phare. Les déplacements de la lame basculante 70 assurent la fonction appel phare.

Bien entendu la présente invention n'est pas limitée au mode de réalisation particulier qui vient d'être décrit mais s'étend à toute variante conforme à son esprit.

En particulier, on peut inverser les moyens d'entraînement assurant la liaison avec perte de course entre le tiroir 100 et le coulisseau 200. C'est-à-dire que la nervure en saillie 240 peut être prévue sur le tiroir 100 et non point sur le coulisseau 200, tandis que la chambre associée 140 serait prévue sur le coulisseau 200 et non point sur le tiroir 100.

En outre on peut bien entendu remplacer les lamelles de connexion 110, 210 et 54 par des simples plots électriquement conducteurs, sollicités par ressort pour assurer sur commande et selon leurs déplacements des liaisons sélectives entre les lames de contact 130, 230 ou équivalents portés par le boitier 10.

## Revendications

1. Commutateur électrique pour la commande des feux de position d'un véhicule automobile, comprenant:
- un boîtier (10),
- un levier (30) guidé à pivotement par rapport au boîtier (10),
- un équipage principal (100) placé dans le boîtier (10), lié au levier (30) pour être déplacé lors du pivotement de celui-ci, et adapté pour commander l'alimentation des indicateurs de changement de direction, caractérisé par le fait que l'équipage principal comprend un tiroir (100) guidé à translation dans le boîtier (10), qu'il comprend en outre un équipage secondaire (200) lié à l'équipage principal (100) par un système à perte de course (140, 240) pour commander les feux de position, l'équipage secondaire comprenant un coulisseau (200) adjacent au tiroir et guidé à translation sur le boîtier (10), par un ensemble à rainure (204)/nervure (17) complémentaires prévues respectivement sur le coulisseau (200) et le boîtier (10), les moyens de liaison à perte de course définis entre l'équipage secondaire (200) et l'équipage principal (100) comprenant une structure en saillie (240) sur l'un de ces deux éléments et une chambre (140) de plus grande extension sur l'autre de ces deux éléments.

2. Commutateur selon la revendication 2, caractérisé par le fait que le tiroir (100) est guidé à translation par un ensemble à rainure (104)/nervure (16) complémentaires prévues respectivement sur le tiroir (100) et le boîtier (10).

3. Commutateur selon l'une des revendications 1 ou 2, caractérisé par le fait que la structure en saillie (240) est prévue sur le coulisseau formant équipage secondaire (200) tandis que la chambre de plus grand extension (140) est prévue sur le tiroir (100) formant équipage principal.

4. Commutateur selon l'une des revendications 1 ou 2, caractérisé par le fait que la structure en saillie est prévue sur le tiroir formant équipage princpal (100) tandis que la chambre de plus grande extension (140) est formée sur le coulisseau (200) constituant l'équipage secondaire.

5. Commutateur selon l'une des revendications 1 à 4, caractérisé par le fait que l'un au moins de l'équipage principal (100) ou de l'équipage secondaire (200) porte une lamelle de connexion en forme générale de U sollicitée par ressort.

6. Commutateur selon la revendication 5, caractérisé par le fait que ladite lamelle de connexion (110, 210) est sollicitée vers un jeu de lames de contact comprenant une lame de contact centrale (132, 232) et deux lames de contact latérales (134, 136, 234, 236).

7. Commutateur selon l'une des revendications 5 ou 6, caractérisé par le fait que chaque lamelle de connexion (110, 210) est maintenue sur l'équipage associé à l'aide de dentures formées par déformation (118, 218) engagées dans des fenêtres (101, 201) correspondantes de l'équipage.

8. Commutateur selon l'une des revendications 1 à 7, caractérisé par le fait que chaque équipage (100, 200) porte une lamelle de connexion (110, 210) en forme générale de U sollicitée élastiquement vers un jeu de lames de contact respectif (130, 230) comprenant chacun une lame de contact centrale (132, 232) et deux lames de contact latérales (134, 136, 234, 236).

9. Commutateur électrique selon l'une des revendications 1 à 8, caractérisé par le fait qu'il comprend des moyens (206, 19) d'indexation de l'équipage secondaire (200) dans sa position de travail.

10. Commutateur selon l'une des revendications 1 à 9, caractérisé par le fait qu'il comprend des moyens ((12, 44) d'indexation du levier (30) et/ou de l'équipage principal (100).

11. Commutateur selon l'une des revendications 1 à 10, caractérisé par le fait que l'équipage principal (100) possède une fourche (124) par l'intermédiaire de laquelle ledit équipage principal (100) est relié au levier (30).

12. Commutateur selon l'une des revendications 1 à 11, caractérisé par le fait que la distance (L1) séparant les milieux des espaces (131, 133) entre une lame de contact centrale (132) et deux lames de contact latérales (134, 136) associées à l'équipage principal (100) est de l'ordre du double de la perte de course (L3) autorisée entre les deux équipages (100, 200).

13. Commutateur électrique selon l'une des revendications 1 à 12, caractérisé par le fait que la distance (L2) entre les milieux des espaces séparant une lame de contact centrale (232) et deux lames de contact latérales (234, 236) associées à l'équipage secondaire (200) est de l'ordre de trois fois la perte de course (L3) autorisée entre les deux équipages (100, 200).
